# EUROPÄISCHE PATENTANMELDUNG

(11) **EP 1 089 490 A2**
(43) Veröffentlichungstag der Anmeldung: **04.04.2001**
(21) Anmeldenummer: 00118572.7
(22) Anmeldetag: 26.08.2000
(51) Int. Cl.: H04L 12/24

(54) **Anordnung zum Verbinden von Kommunikationsendpunkten eines ersten Telekommunikationsnetzwerkes mit wenigstens einem weiteren Telekommunikationsnetzwerk**

(30) Priorität: 28.09.1999 DE 19946355
(71) Anmelder: Tenovis GmbH & Co. KG, 60362 Frankfurt (DE)
(72) Erfinder: Weirauch, Andreas, D - 85649 Brunnthal. (DE); Wiese, Garrelt, 64297 Darmstadt (DE)
(74) Vertreter: Beck, Josef

(57) **Zusammenfassung**

Die Erfindung betrifft eine Anordnung zum Verbinden von Kommunikationsendpunkten eines ersten Telekommunikationsnetzwerkes mit wenigstens einem weiteren Telekommunikationsnetzwerk, wobei die Übergänge zwischen den Telekommunikationsnetzwerken von in die Telekommunikationsnetzwerke eingebundene Gateways gebildet sind.

Es ist vorgesehen, daß das erste Telekommunikationsnetzwerk (10) eine Verwaltung (40) umfaßt, die direkt mit den Kommunikationsendpunkten (12, 14, 16) und den Gateways (30, 32, 34) verbunden ist, wobei die Gateways (30, 32, 34) ihre Verfügbarkeit bei der Verwaltung (40) anmelden und daraufhin von der Verwaltung (40) permanent überwacht sind.

## Beschreibung

Die Erfindung betrifft eine Anordnung zum Verbinden von Kommunikationsendpunkten eines ersten Telekommunikationsnetzwerkes mit wenigstens einem weiteren Telekommunikationsnetzwerk, wobei die Übergänge zwischen den Telekommunikationsnetzwerken von in die Telekommunikationsnetzwerke eingebundenen Gateways gebildet sind.

### Stand der Technik

Bekannte Strukturen zum Verbinden von Kommunikationsendpunkten eines ersten Telekommunikationsnetzwerkes, beispielsweise eines IP(internet phone)-basierten Netzwerkes, mit wenigstens einem Kommunikationsendpunkt eines weiteren verschiedenartigen Telekommunikationsnetzwerkes, beispielsweise einem ISDN-Netzwerk, gehen davon aus, daß in die unterschiedlichen Telekommunikationsnetzwerke Gateways eingebunden sind, mittels denen Verbindungen zwischen den unterschiedlichen Kommunikationsendpunkten geroutet werden können. Den Gateways ist hierbei eine Vermittlungsanlage (Gatekeeper) zugeordnet, die über ein Verwaltungsprogramm ansteuerbar ist. Soll nun eine Verbindung von einem Kommunikationsendpunkt des ersten Telekommunikationsnetzwerkes aufgebaut werden, wird von dem Kommunikationsendpunkt die Vermittlungsanlage (Gatekeeper) angesprochen. Über das Verwaltungsprogramm bestimmt dann die Vermittlungsanlage, welcher Gateway-Übergang in das andere Telekommunikationsnetzwerk zu nutzen ist. Die Kommunikation zwischen den Kommunikationsendpunkten, der Vermittlungsanlage, dem Gateway und dem Verwaltungsprogramm erfolgt hierbei über meldungsbasierte Protokolle (H.323/RAS/CSTA). Damit mittels derartiger meldungsbasierter Protokolle ein Verbindungsaufbau erfolgen kann, muß sichergestellt sein, daß die beteiligten Komponenten, also die Kommunikationsendpunkte, das Gateway, die Vermittlungsanlage und das Verwaltungsprogramm, sich in einer Phase einer Programmsteuerung befinden, so daß eine korrekte Reaktion auf die jeweilige Meldung erfolgt.

Zur Abarbeitung dieser meldungsbasierten Protokolle müssen administrativ Schnittstellen eingerichtet werden, deren Entwicklungsaufwand relativ hoch ist. Ferner sind zum Einbinden unterschiedlicher Kommunikationsendpunkte entsprechend modifizierte Schnittstellen notwendig, so daß eine Standardisierung erheblich erschwert ist. Durch die unterschiedlichen Modifizierungen sind die Schnittstellensteuerungen darüber hinaus relativ fehleranfällig.

### Vorteile der Erfindung

Die erfindungsgemäße Anordnung mit den im Anspruch 1 genannten Merkmalen bietet demgegenüber den Vorteil, daß die Auswahl eines Gateways zum Aufbau einer Verbindung von einem Kommunikationsendpunkt eines Telekommunikationsnetzwerkes zu einem anderen Kommunikationsendpunkt eines weiteren Telekommunikationsnetzwerkes wesentlich vereinfacht und verbessert ist. Dadurch, daß das erste Telekommunikationsnetzwerk eine Verwaltung umfaßt, die direkt mit den Gateways verbunden ist, wobei die Gateways ihre Verfügbarkeit bei der Verwaltung anmelden und daraufhin von der Verwaltung permanent überwacht werden, können verbesserte Strategien bei der Zuordnung der Gateways zu den Kommunikationsendpunkten realisiert werden, beispielsweise Minimierung der Kommunikationskosten (Least-Cost-Routing) oder gleichmäßigere Verteilung der Kommunikationsbeziehungen auf die zur Verfügung stehenden Gateways (Load-Balancing).

Ferner ist vorteilhaft, da die Gateways nunmehr sich selber bei der Verwaltung anmelden, indem diese ein Verbindungsobjekt übergeben und hierauf von der Verwaltung ein Verbindungsüberwachungsobjekt erhalten, daß eine zusätzliche Administration der Gateways nicht notwendig ist. Die Verwaltung verfügt durch Austausch der Verbindungsobjekte und der Verbindungsüberwachungsobjekte permanent über alle notwendigen Zustandsinformationen der Gateways. Die Verwaltung ist hierbei so ausgelegt, daß die Anmeldung beziehungsweise Abmeldung der Gateways von diesen automatisch vorgenommen wird, so daß zusätzliche, zu programmierende Schnittstellen nicht erforderlich sind.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: schematisch die Verbindungsstruktur von zwei Kommunikationsnetzwerken nach dem Stand der Technik;
- Figur 2: schematisch die Verbindungsstruktur eines Kommunikationsnetzwerkes gemäß der Erfindung;
- Figur 3: schematisch die Registrierung eines Gateways und
- Figur 4: schematisch die Auswahl eines Gateways bei einem Verbindungsaufbau.

### Beschreibung der Ausführungsbeispiele

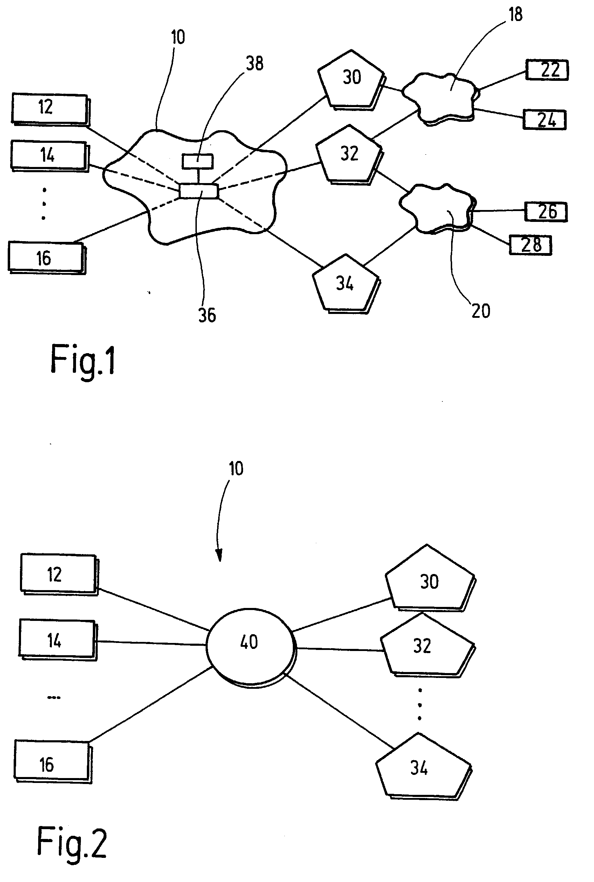

Figur 1 zeigt die Verknüpfung von Telekommunikationsnetzen gemäß dem Stand der Technik. Ein erstes Telekommunikationsnetzwerk 10 ist mit einer Vielzahl von Kommunikationsendpunkten 12, 14, 16 verbunden. Zur Vereinfachung sind lediglich drei Kommunikationsendpunkte dargestellt, wobei klar ist, daß die Anzahl wesentlich höher liegen kann. Ferner sind weitere Telekommunikationsnetzwerke 18 und 20 angedeutet, die ebenfalls über eine Vielzahl von Kommunikationsendpunkten 22, 24, 26 beziehungsweise 28 verfügen. Eine Verknüpfung der Telekommunikationsnetzwerke 10, 18 und 20 erfolgt über Gateways 30, 32 beziehungsweise 34. Die Telekommunikationsnetze, wie hier beim Telekommunikationsnetzwerk 10 angedeutet, verfügen über eine Vermittlungsstelle 36, die über ein Verwaltungsprogramm 38 betreibbar ist.

Ist gemäß dem Stand der Technik vorgesehen, beispielsweise eine Verbindung vom Kommunikationsendpunkt 12 des Telekommunikationsnetzwerkes 10 zum Kommunikationsendpunkt 26 des Telekommunikationsnetzes 20 aufzubauen, wird vom Kommunikationsendpunkt 12 eine entsprechende Protokollmeldung an die Vermittlungsanlage 36 (Gatekeeper) gemeldet, die daraufhin das zu verwendende Gateway, hier Gateway 32 oder Gateway 34, bestimmt und dies dem Kommunikationsendpunkt 12 mitteilt. Die Abarbeitung dieser Meldungen wird über das Verwaltungsprogramm 38 gesteuert. Anhand dieser kurzen Erläuterung wird bereits deutlich, daß eine Reihe von meldungsbasierten Protokollen zwischen den einzelnen beteiligten Komponenten zu etablieren sind.

Das Telekommunikationsnetzwerk 10 ist beispielsweise ein IP(internet phone)-basiertes Netzwerk, während die Telekommunikationsnetzwerke 18 und 20 beispielsweise ISDN-Netzwerke sind. Die Darstellung in Figur 1 erfolgt lediglich, um anhand der nachfolgenden Erläuterungen den wesentlichen Unterschied zu der erfindungsgemäßen Struktur zu verdeutlichen.

Figur 2 zeigt schematisch die Kommunikationsendpunkte 12, 14, 16 des Telekommunikationsnetzwerkes 10, die über Gateways 30, 32 oder 34 mit Kommunikationsendpunkten anderer Telekommunikationsnetzwerke verbindbar sind. Den Gateways 30, 32, 34 ist hier eine Verwaltung (Gateway-Broker) 40 zugeordnet. Die Verwaltung 40 ist einerseits direkt mit den Kommunikationsendpunkten 12, 14, 16 und andererseits mit den Gateways 30, 32, 34 verbunden. Bei Einrichten oder Verändern des Telekommunikationsnetzwerkes 10 melden sich alle Gateways 30, 32, 34 automatisch bei der Verwaltung 40 an beziehungsweise bei Entfernen ab. Somit ist die Verwaltung 40 ständig über den aktuellen Verbindungszustand der Gateways 30, 32 und 34 informiert. Durch die Verwaltung 40 kann somit bei Anforderung von Verbindungen durch die Kommunikationsendpunkte 12, 14, 16 eine gleichmäßige Verteilung auf die zur Verfügung stehenden Gateways 30, 32, 34 optimal gesteuert werden.

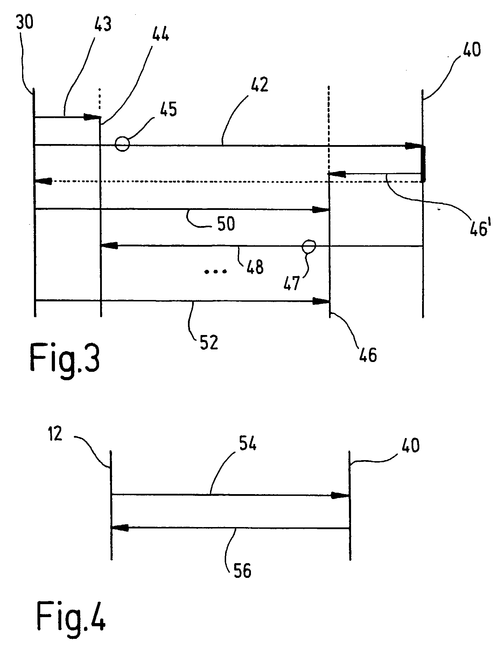

Damit die Verwaltung 40 über den aktuellen Zustand der Gateways 30, 32, 34 informiert ist, melden diese sich automatisch an beziehungsweise ab, wie schematisch in Figur 3 dargestellt ist. Zunächst fragt das neu in das Telekommunikationsnetzwerk 10 eingebundene Gateway 30 in einem netzwerkinternen Verzeichnisdienst die Adresse der Verwaltung 40 an. Diese Adresse der Verwaltung 40 ist standardisiert und einheitlich festgelegt. Nach Zuweisung dieser Referenz zum Gateway 30 schafft das Gateway 30 eine Kontrollebene 44, wie durch den Schritt 43 angedeutet ist. Gleichzeitig wird der Verwaltung 40 eine Referenz auf ein Kontrollobjekt 45 übertragen (Schritt 42). Die Verwaltung 40 schafft hierauf eine Überwachungsebene 46 und übersendet dem Gateway 30 eine Referenz auf ein Überwachungsobjekt 47 (Schritt 48). Nach Aufbau dieser Beziehung zwischen Gateway 30 und Verwaltung 40 kann das Gateway 30 ständig seinen aktuellen Zustand an die Überwachungsebene 46 der Verwaltung 40 melden. Dadurch, daß beispielsweise eine Meldung 50 für einen zur Verfügung stehenden Überwachungsetatus oder eine Meldung 52 für den Fall der Abmeldung des Gateways 30 bei der Verwaltung 40 eingeht, ist der Verwaltung 40 der aktuelle Zustand des Gateways 30 bekannt. Durch diese ständigen Zustandsinformationen ist die Verwaltung 40 in der Lage, durch Methodenaufruf an die Kontrollebene 44 das Gateway 30 zu steuern beziehungsweise abzufragen (gemäß Schritt 48).

Wird nunmehr vom Kommunikationsendpunkt 12 ein Verbindungsaufbau gewünscht, fragt der Kommunikationsendpunkt 12 zunächst im internen Netzdienst die Referenzadresse der Verwaltung 40 an. Darauf wird eine Verbindungsanfrage 54, wie Figur 4 verdeutlicht, an die Verwaltung 40 gerichtet, indem der Kommunikationsendpunkt 12 bei der Verwaltung 40 nach einem passenden Gateway für die Verbindung 54 nachfragt. Da die Verwaltung 40 durch den Austausch der Kontrollobjekte 45 und Überwachungsobjekte 47 (Kontrollebene 44 und Überwachungsebene 46) mit den Gateways 30 über den aktuellen Zustand informiert ist, wählt die Verwaltung 40 ein Gateway 30 aus und übergibt ein Rückgabeparameter 56 an den Kommunikationsendpunkt 12 und teilt somit ein Gateway 30 zu.

Anhand der Erläuterung wird deutlich, daß die in das Telekommunikationsnetzwerk 10 implementierte Verwaltung 40 durch die fortlaufende Überwachung der Zustände der Gateways 30, 32, 34 sofort eine Zuordnung zu einem Kommunikationsendpunkt 12, 14, 16 bei Bedarf nach einer Verbindung vornehmen kann. Durch den einfachen Austausch der Referenzen, nämlich der Übertragung des Kontrollobjektes 45 und den hierauf erfolgenden Erhalt des Überwachungsobjektes 47, sind die zur Verfügung stehenden Verbindungsmöglichkeiten für die Verwaltung 40 sofort sichtbar, so daß unmittelbar die Übertragung des Rückgabeparameters 56 an den Kommunikationsendpunkt 12 erfolgen kann.

## Patentansprüche

1. Anordnung zum Verbinden von Kommunikationsendpunkten eines ersten Telekommunikationsnetzwerkes mit wenigstens einem weiteren Telekommunikationsnetzwerk, wobei die Übergänge zwischen den Telekommunikationsnetzwerken von in die Telekommunikationsnetzwerke eingebundene Gateways gebildet sind, **dadurch gekennzeichnet**, daß das erste Telekommunikationsnetzwerk (10) eine Verwaltung (40) umfaßt, die direkt mit den Kommunikationsendpunkten (12, 14, 16) und den Gateways (30, 32, 34) verbunden ist, wobei die Gateways (30, 32, 34) ihre Verfügbarkeit bei der Verwaltung (40) anmelden und daraufhin von der Verwaltung (40) permanent überwacht sind.

2. Anordnung nach Anspruch 1, **dadurch gekennzeichnet**, daß die Anmeldung der Gateways (30, 32, 34) automatisch erfolgt.

3. Anordnung nach einem der vorhergehenden Ansprüche, **dadurch gekennzeichnet**, daß die Gateways (30, 32, 34) der Verwaltung (40) ein Kontrollobjekt (45) übergeben und von der Verwaltung (40) ein Überwachungsobjekt (47) erhalten.

4. Anordnung nach einem der vorhergehenden Ansprüche, **dadurch gekennzeichnet**, daß die Verwaltung (40) eine feste, standardisierte Adresse im Telekommunikationsnetzwerk (10) besitzt.

5. Anordnung nach einem der vorhergehenden Ansprüche, **dadurch gekennzeichnet**, daß die Kommunikationsendpunkte (12, 14, 16) der Verwaltung (40) eine Verbindungsanfrage (54) übermitteln und von der Verwaltung (40) in Abhängigkeit des Zustandes der vorhandenen Überwachungsobjekte (47) ein Rückgabeparameter (56) zum Aufbau einer Verbindung erhalten.
